# EUROPEAN PATENT APPLICATION

(11) **EP 4 826 243 A1**
(43) Date of publication of application: **21.10.2026**
(21) Application number: 25305558.6
(22) Date of filing: 16.04.2025
(51) Int. Cl.: F03D 13/10, F03D 13/25, F03D 13/40

(54) **OFFSHORE INTERVENTION PLATFORM**

(71) Applicant: Technip Energies France, 92741 Nanterre Cedex (FR)
(72) Inventor: DECHIRON, Cyrille, 92741 Nanterre Cedex (FR); BAIZEAU, Regis, 92741 Nanterre Cedex (FR); CHAIM, Victor, 92741 Nanterre Cedex (FR); MASSEBEUF, Olivier, 92741 Nanterre Cedex (FR)
(74) Representative: Edson, Russell Gregory

(57) **Abstract**

An articulated arm having a first arm part, a second arm part and a telescopic joint coupling the first arm part with the second arm. The arm has a hinge for connection to a portion of an intervention platform, the hinge permitting movement of the articulated arm about a first plane. The arm also has an intervention element connected to the second arm part to interact with a wind turbine component. The second arm part has a guide portion to couple to a wind turbine mast. An offshore intervention platform and an intervention method on an offshore wind turbine platform are also described.

## Description

### Technical Field

The present disclosure relates to maintenance of offshore vessels, and more particularly, to systems and methods for manipulating components of an offshore wind turbine platform.

### Background

Wind turbines are commonly situated in offshore locations, either on floating platforms which may be tethered to the seabed, or on jack-up platforms connected via legs to the seabed. Installation and maintenance of the wind turbines of offshore wind turbine platforms are complex and costly operations. For example, the replacement of a floating wind turbine blade may be performed onshore, however this means that the entire floating wind turbine platform must be towed from and to the offshore location. Such a towing operation is costly in time and resource. Alternatively, the wind turbine blade may be installed or replaced at the offshore location of the offshore wind turbine platform, lessening the complexity of the towing operation but increasing the complexity of the wind turbine blade installation, given the remote location of the offshore location and the challenging weather conditions of the offshore location.

### Summary

Aspects of this disclosure are directed to providing an offshore intervention platform particularly adapted to offshore platforms for installation and maintenance operations to be performed even in potentially harsh conditions.

According to an embodiment, there is provided an articulated arm comprising: a first arm part and a second arm part; a telescopic joint coupling the first arm part with the second arm part; a hinge for connection to a portion of an intervention platform, the hinge permitting movement of the articulated arm about a first plane, an intervention element connected to the second arm part to interact with a wind turbine component; wherein the second arm part has in a guide portion to couple to wind turbine mast.

The articulated arm enables an engagement with the wind turbine mast such that the intervention element may follow movement of the wind turbine mast relative to the intervention platform. The extension and retraction of the second arm part relative to the first arm part via the telescopic joint, and the pivoting of the articulated arm about the hinge means that any relative movement between the intervention element and the wind turbine mast in the first plane is reduced. In particular, the relative movement between the intervention element and the portion of the wind turbine mast adjacent the nacelle is reduced. The engagement is controlled to allow a minimum level of pressure load is applied to the mast to control the elongation of the articulated arm; however, no significant pressure load is transferred through the articulated arm to the turbine mast. In this sense, the engagement may be termed as a soft engagement, rather than a positive engagement. A greater accuracy of intervention operation may thereby be achieved, whilst accounting for the effect of challenging weather conditions of the offshore location on the wind turbine and intervention platform.

The hinge may be a dual axis hinge, also permitting movement of the articulated arm about a second plane. The second plane may be the vertical plane. The hinge may be configured to allow a rotation of the arm in the vertical plane.

The hinge may have a compliant feature, the compliant feature permitting movement of the articulated arm about a second plane. The second plane may be the vertical plane.

The guide portion may be connected to the second arm part with a sliding joint, to permit relative movement of the guide portion and the second arm part.

By allowing movement in the vertical plane of the guide portion relative to the turbine mast, any sliding motion of the guide portion over the surface of the turbine mast can be avoided.

The guide portion may have a concave surface to couple to a wind turbine mast. The concave surface enables the soft engagement of the articulated arm with the wind turbine mast, and ensures that movement of the mast in multiple directions in the first plane may be accounted for.

The guide portion may be arcuate in form.

The guide portion may extend in an arc that is between 90 and 180 degrees around the vertical axis.

The guide portion may be a V-shape.

The guide portion may be optimised to ensure that the articulated arm reacts to relative movements in the horizontal plane, whilst accounting for variations in geometry between different categories of wind turbine masts.

The articulated arm may further comprise a motion compensation device, wherein the intervention element is provided on the motion compensation device. The motion compensation device may be responsible for the final location of intervention element, with a high degree of accuracy and control. The motion compensation device may be a table which may be moved in the horizontal plane along the x-axis and the y-axis. The motion compensation device may be a hexapod. The hexapod allows accurate final positioning of the intervention element, including adjustments six degrees of freedom - x, y, z, roll, pitch, and yaw.

The intervention element may comprise a support.

The intervention element may comprise a prehension device. This allows the component, to be removed or replaced or maintained, to be grasped.

The intervention element may be configured to engage a turbine blade in the region of a wind turbine blade flange. The prehension device may comprises a single jaw. The single jaw may be configured to engage with a wind turbine blade flange. By grasping the wind turbine blade flange a relatively low apparent weight is supported with a high degree of accuracy, precisely where the accuracy is required. For example, when exchanging a turbine blade, the final positioning of the turbine root, adjacent the flange, on the turbine hub requires the greatest accuracy of position.

The intervention element may comprise a crane. The crane allows for various intervention operations, such as replacing or removing turbine nacelle components.

According to a further embodiment, there is provided an offshore intervention platform comprising: an elevator having a carriage, the carriage being translatable along a longitudinal axis of the elevator; an articulated arm having a first arm part and a second arm part; a telescopic joint coupling the first arm part with the second arm part; a hinge connected to a portion of the carriage, the hinge permitting movement of the articulated arm in a first plane, the articulated arm having an intervention element connected to the second arm part to interact with a wind turbine component, and wherein the second arm part has a guide portion to couple to a wind turbine mast.

The articulated arm of the offshore intervention platform enables an engagement with the wind turbine mast such that the intervention element may follow movement of the wind turbine mast relative to the intervention platform in the horizontal plane and thereby minimise relative movement between the intervention element and the wind turbine mast. A greater accuracy of intervention operation may thereby be achieved, whilst accounting for the effect of challenging weather conditions of the offshore location on the wind turbine and intervention platform.

The carriage may be provided with a further intervention element to interact with the wind turbine component, and wherein the further intervention element is translatable along a plane perpendicular to the longitudinal axis of the elevator. The further intervention element may comprise a support. The further intervention element may comprise a second prehension device. The further intervention element may be used to support the component to be removed or replaced or maintained, which itself may otherwise suffer from distortion.

The intervention element may support a turbine blade in the region of a wind turbine blade flange and the further intervention element may support a turbine blade in the region of a wind turbine blade centre of gravity. By supporting the intervention element with the wind turbine blade flange, whilst supporting the majority of the turbine blade weight at its centre of gravity with the further intervention element, a relatively low apparent weight is supported with a high degree of accuracy, precisely where the accuracy is required. For example, when exchanging a turbine blade, the final positioning of the turbine root, adjacent the flange, on the turbine hub requires the greatest accuracy of position.

The further intervention element may be positioned close to a turbine blade centre of gravity. The intervention element may be position close to a turbine blade root, adjacent the turbine blade flange. Supporting the majority of the turbine blade weight at the centre of gravity of the turbine blade avoids a fishing rod effect, where the turbine blade bends and distorts under its own weight. Furthermore, the support at the turbine blade root may be light and responsive to movements of the mast where accurate positioning is required. This allows relative motion of the turbine blade and turbine mast to be minimized.

The further intervention element may be provided on a transfer table connected to the carriage, the transfer table being translatable along a plane perpendicular to the longitudinal axis of the elevator. The transfer table allows pre-location of the further intervention element, such that the further intervention element may be positioned, for example, in the region of the centre of gravity of the component to be removed or replaced or maintained. Furthermore, the transfer table facilitates loading and unloading of wind turbine components from a support vessel.

The hinge may also permit movement of the articulated arm about a second plane. The second plane may be the vertical plane.

The articulated arm may have a first motion compensation device connected between the second arm part and the intervention element.

The carriage may have a second motion compensation device connected between the carriage and the further intervention element.

The second motion compensation device may be sized to be larger than the first motion compensation device.

The offshore intervention platform may further comprise a further articulated arm, wherein the articulated arm and further articulated arm are positioned on opposite sides of the carriage. Having a pair of articulated arms on opposite sides of the carriage allows the intervention platform to operate from either side of the wind turbine, allowing the intervention operation to take account of prevailing wind conditions or other environmental or operational factors.

The elevator may be adjustable in height. This allows the intervention platform to be used with a variety of wind turbines, as well as allowing optimisation of the motion compensation systems such that the motion compensation systems are concerned with fine tuning the vertical z-axis position rather than any substantial movements of the first prehension device and intervention element along the vertical z-axis.

The elevator may be telescopic. This allows a lower centre of gravity for the intervention platform, which improves stability and, for floating offshore platform, facilitates autonomous navigation and towing operations.

According to a further embodiment, there is provided an intervention method on an offshore wind turbine platform comprising the following steps: raising a carriage along a vertical axis of an elevator; deploying an articulated arm to couple to a mast of the offshore wind turbine platform via a guide portion, wherein the articulated arm has a first arm part and a second arm part, the second arm part having the guide portion; a telescopic joint to permit extension and retraction of the second arm part relative to the first arm part; a hinged joint connected to a portion of the carriage, the hinged joint permitting movement of the articulated arm in a horizontal plane; the articulated arm having an intervention element connected to the second arm part to interact with a wind turbine component; following movement of the wind turbine mast relative to the intervention platform in the horizontal plane by extension and retraction articulated arm and by pivoting of the articulated arm about the hinged joint; and performing an intervention on the offshore wind turbine platform using the intervention element.

The carriage may have a second motion compensation device and a further intervention element to interact with a wind turbine component and wherein the step of performing an intervention on the offshore wind turbine platform may comprise using both the intervention element and further intervention element.

Performing the intervention may comprise removing a wind turbine equipment and/or mounting a wind turbine equipment, in particular a blade of the wind turbine using the intervention element and further intervention element, wherein the intervention element comprises a first prehension device connected to a first motion compensation device and the further intervention element comprises a second prehension device connected to a second motion compensation device.

Alternatively, or additionally, performing the intervention may comprise mounting a wind turbine equipment on the wind turbine using a first prehension device connected to the first motion compensation device and a second prehension device connected to the second motion compensation device.

The intervention method may comprise the further step of moving the further intervention element from a first side of the carriage to a second side of the carriage when the carriage is at the vertical limit of the elevator.

### Brief Description of the Drawings

FIG. 1 is a schematic perspective view of a floating offshore wind turbine platform floating on a body of water;
FIG. 2 is a schematic partial perspective view of an intervention platform;
FIG. 3 is an enlarged schematic partial perspective view of the intervention platform of FIG. 2;
FIG. 4A is a schematic side elevation of a docked floating intervention platform and floating offshore wind turbine platform;
FIG. 4B is a schematic plan view of the docked floating intervention platform and floating offshore wind turbine platform;
FIG. 4C is a schematic side elevation of the docked floating intervention platform and floating offshore wind turbine platform;
FIG. 5A is a schematic partial front elevation the docked floating intervention platform and floating offshore wind turbine platform;
FIG. 5B is a schematic partial plan view the docked floating intervention platform and floating offshore wind turbine platform
FIG. 6 is a flowchart of a method of removing a turbine blade from an offshore wind turbine platform;
FIGS. 7A to 7D are schematic perspective views showing selected steps in the method of FIG. 6; and
FIG. 8 is a flowchart of a method of installing a turbine blade from an offshore wind turbine platform.

### Detailed Description

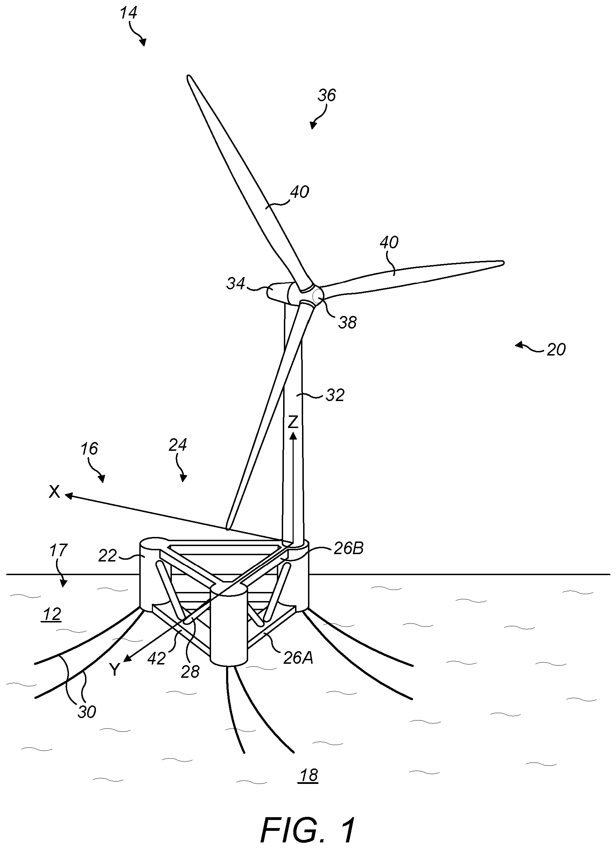

FIG. 1 is a schematic perspective view of an example of a floating offshore wind turbine platform floating on a body of water. A wind turbine platform 14 is for example located in an offshore wind farm floating at or near the surface of the body of water 12. The body of water 12 in the vicinity of the offshore wind turbine platform 14 has a depth greater than 40 meters, although in one or more embodiment such a platform 14 could work in a body of water with a depth of less than 40 meters. The body of water 12 is for example an ocean, a sea, a lake, and/or a river.

In reference to the example of FIG. 1, the wind turbine platform 14 has a floating foundation 16, an anchoring assembly 17 anchoring the floating foundation 16 to the bottom 18 of the body of water 12 and a wind turbine 20 carried by the floating foundation 16.

In the present example, the floating foundation 16 is a semi-submersible platform, although alternative platform types that are also suitable for servicing with any of the disclosed embodiments include tethered and non-tethered platforms, as well as offshore wind turbine provided on a subsea monopile foundation or a jacket.

A semi-submersible platform according to this disclosure comprises a plurality of columns and a plurality of pontoons. Buoyancy may be provided to the platform by the pontoons, by the columns, or both. In this example, the floating foundation 16 comprises three floating columns 22 that provide at least some buoyancy to the foundation 16. The foundation 16 also include frame elements 24 connecting the floating columns 22, and potentially, a deck (not shown).

The frame elements 24 here comprise lower pontoons 26A, connecting each pair of adjacent floating columns 22 at the bottom of the columns 22, upper pontoons 26B connecting each pair of adjacent floating columns 22 at the top of the floating columns 22. The pontoons 26A, 26B in this example also provide at least some buoyancy to the floating foundation 16. Thus, the floating foundation 16 may float by the buoyancy contributed by the floating columns, by the pontoons, or both the floating columns and pontoons.

The floating columns 22 extend vertically. The floating columns 22 have a buoyancy volume providing buoyancy to the floating buoyancy to the floating foundation 16. The buoyancy is adapted such that the floating foundation 16 is partially immersed in the body of water 12.

The anchoring assembly 17 comprises a plurality of anchoring lines 30 connecting each column 22 to the bottom 18 of the body of water 12. In the example of FIG. 1, each floating column 22 is connected to at least one anchoring line 30, preferentially, between one and four anchoring lines 30.

The wind turbine platform 14 is therefore restrained in horizontal position in the body of water 12.

The wind turbine 20 classically comprises a mast 32, a nacelle 34 mounted rotatable at the top of the mast 32, and a rotor 36, mounted rotatable with regards to the nacelle 34 preferentially about a horizontal axis.

The rotor 36 comprises a central hub 38 and blades 40 protruding radially from the central hub 38, the blades being reversibly fixed on the hub 38. The wind turbine 20 is typically in the category of those capable of generating 12 to 18 Megawatts, typically 15 Megawatts. Such wind turbines 20 are very large structures, with a nacelle 34 typically 130 m from a surface of the body of water 12. The blades 40 are typically 115 m long and weigh approximately 60 to 65 metric tonnes each.

The mast 32 is here fixed on top of a floating column 22, coaxially with the floating column 22 axis.

The floating columns 22 and advantageously the lower pontoons 26A define a lower surface 42 of the wind turbine platform 14, below which an intervention platform 100 is able to dock as will be described in more detail below.

For the purpose of explanation, a cartesian coordinate system is established with respect to the wind turbine platform 14, with the junction of the mast 32 with the floating column 22 acting as the datum. From the point, the y axis extends horizontally along the upper pontoon 26B, the x axis extends horizontally and perpendicular to the x-axis, and the z-axis extends vertically up the mast 32.

### Floating Offshore Intervention Platform

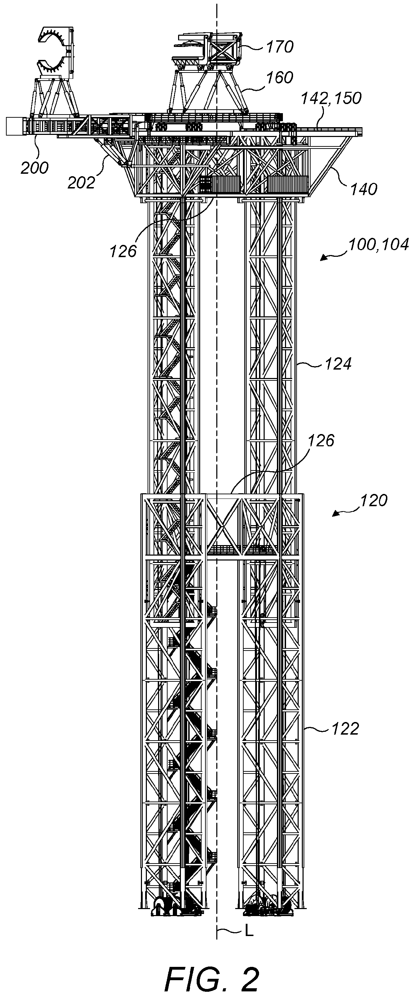

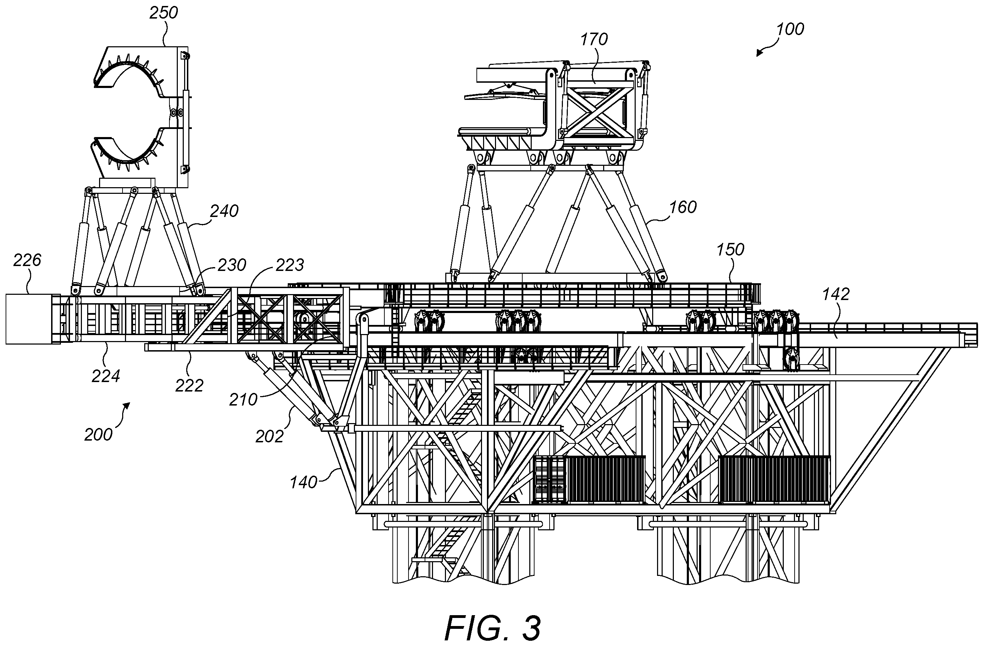

An offshore intervention platform 100 is shown in FIGS. 2 to 5B. In particular, FIG. 2, which is a schematic partial perspective view of an offshore intervention platform 100, and FIG 3, which is an enlarged schematic partial perspective view of the intervention platform of FIG 2.

The offshore intervention platform 100 is intended to carry out an installation and/or maintenance intervention on at least one offshore wind turbine platform. The at least one offshore wind turbine platform may be a floating offshore wind turbine platform 14 shown in FIG. 1. Alternatively, or additionally, the at least one offshore wind turbine platform may be fixed (i.e. non-floating), for example an offshore wind turbine provided on a subsea monopile foundation or a jacket. A jacket may be a lattice framework that has three or four anchors set on the seafloor.

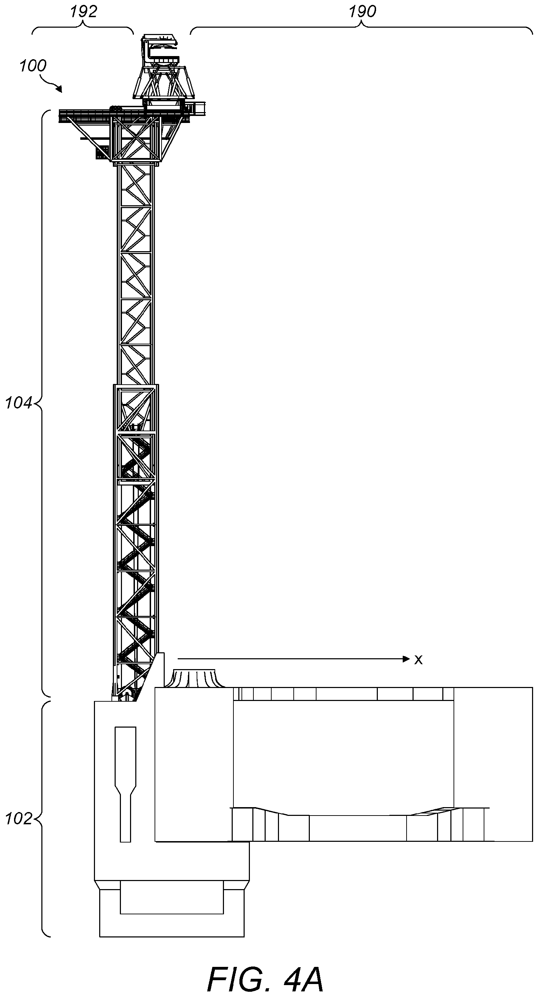

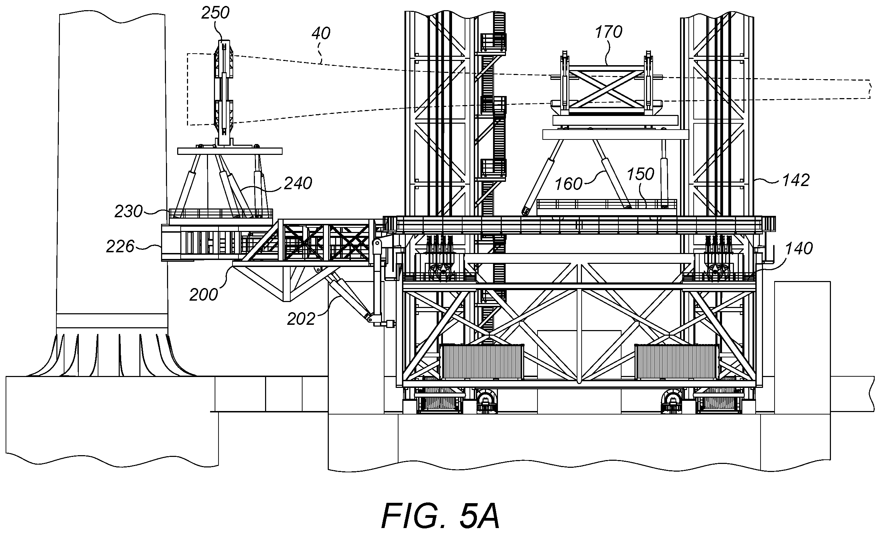

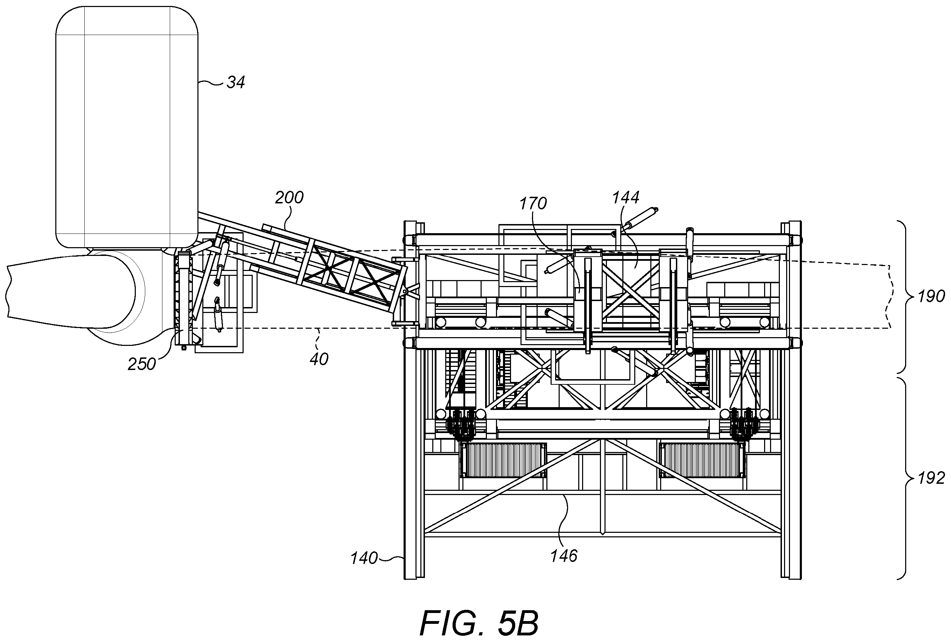

Equally, the offshore intervention platform 100 may be a floating intervention platform as shown in FIGS. 4A to 5B, where FIGS. 4A to 4C are schematic front elevation, plan view and side elevation respectively, of a docked floating intervention platform and floating offshore wind turbine platform and where FIGS. 5A and 5B are schematic partial side elevation and plan view respectively, of the docked floating intervention platform and floating offshore wind turbine platform. In FIG. 4A the turbine mast 32, nacelle 34 and rotor 36 have been removed for clarity. The floating offshore intervention platform may be a semi-submersible platform and floats on the body of water 12. Alternatively, the offshore intervention platform may be provided on a specific support vessel. Alternatively, or additionally the offshore intervention platform may be non-floating at the point of intervention, in that the intervention element is provided on a jack-up platform.

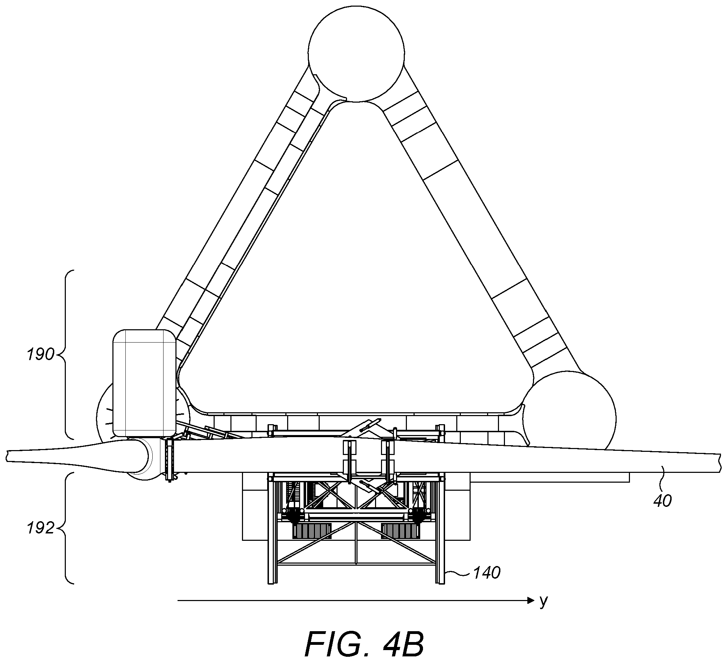

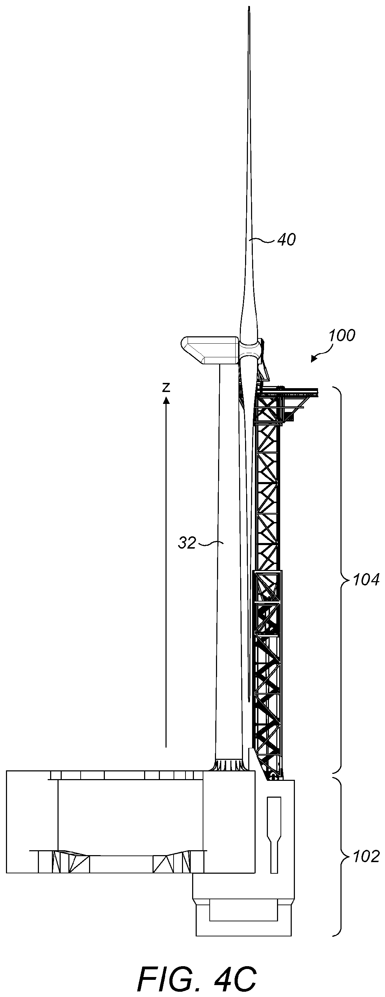

The floating offshore intervention platform comprises a predominantly immersed portion 102 concerned with maintaining buoyancy, position and docking with the floating foundation 16 of the floating offshore wind turbine platform 14. The floating offshore intervention platform 100 is configured to be moved at the surface of the body of water 12 to come in the vicinity of the wind turbine platform 14. It is configured to dock and be immobilized on the wind turbine platform 14 during an intervention. As shown in FIGS. 4A, 4B and 4C, the floating intervention platform 100 docks with the floating foundation 16 of the wind turbine platform 14 and for the purposes of explanation shares the same cartesian coordinate system established with respect to the wind turbine platform 14, with the junction of the mast 32 with the floating column 22 acting as the datum (best shown in FIG. 4B) with the y axis extending horizontally along the upper pontoon 26B, the x axis extending horizontally and perpendicular to the x-axis, and the z-axis extending vertically up the mast 32.

The floating offshore intervention platform also comprises a predominantly above sea level portion 104 concerned with interacting with the wind turbine 20 to perform the intervention. The predominantly above sea level portion 104 is the same for floating and non-floating intervention platforms and will be described in detail with reference to FIG. 2.

The above sea level portion 104 of the offshore intervention platform 100 comprises a lifting tower or elevator 120. The elevator 120 has a longitudinal axis L running in parallel to the z-axis of the mast 32.

The elevator 120 comprises a base section 122 and a telescopic section 124. The telescopic section 124 may be extended relative to the base section 122 to increase the amount to which the elevator 120 extends along the longitudinal axis L. The telescopic section 124 may be extended relative to the base section 122 to pre-set increments, for example through the use of locking devices such as actuated pins. Alternatively, or additionally, the telescopic section 124 may be extended relative to the base section 122 using a lifting system. Both the base section 122 and the telescopic section 124 comprise two masts, each connected by respective cross brace sections 126. The masts are arranged along the y-axis of the offshore intervention platform, and present a turbine mast side 190 (with a positive x-axis coordinate) and a support vessel side 192 (with a negative x-axis coordinate).

The elevator 120 has a carriage 140. The carriage 140 is moveable along the longitudinal axis L of the elevator 120. The carriage 140 is moveable by means of a lifting arrangement, such as pulleys and/or cables and/or winches. The carriage 140 surrounds the elevator 120. The carriage has an upper surface 142. The upper surface of the carriage 140 provides two support zones, one on the turbine mast side 190 - the turbine support zone 144, and one on the support vessel side 192 - the support vessel zone 146.

A transfer table 150 is slidably connected to the upper surface 142 of the carriage 140. The transfer table 150 moveable along the x-axis when the carriage 140 is near the top of the elevator 120, such that the transfer table 150 is vertically free of the masts of the elevator 120. That is, the transfer table 150 may be moved between the turbine support zone 144 and the support vessel side zone 146. The transfer table 150 is also moveable along the y-axis, which is effectively along the axis of the blade 40 when parked horizontally, i.e. toward and from the nacelle 34.

Referring to FIG. 3, the offshore intervention platform 100 further comprises an articulated arm 200 configured for engagement with the wind turbine 20 as will be described in more detail below.

The articulated arm 200 comprises a base section 222 and a telescopic section 224. The base section 222 and telescopic section 224 are connected via a telescopic joint 223. The telescopic section 224 may be extended along the longitudinal axis of the articulated arm 200.

The telescopic section 224 terminates in a guide portion 226. The guide portion is sized to engage with the mast 32. The guide portion 226 may have a contact surface. The guide portion 226 may be connected to the telescopic section 224 with a sliding joint 225. The sliding joint 225 permits movement of the articulated arm 200 in the vertical plane relative to the mast 32, whilst the guide portion 226 does not move in the vertical plane relative to the mast 32.

The guide portion 226 presents a concave surface to the mast 32. The guide portion 226 is arc-shaped in plan view (i.e. around the Z-axis). The arc-shape can be configured according to the turbine mast shape underneath the nacelle 34. The guide portion 226 extends in an arc that is between 90 and 180 degrees. Alternatively, the guide portion 226 may extend in an arc that is between 120 and 180 degrees. Alternatively, the guide portion 226 may extend in an arc that is between 120 and 150 degrees. A set of guide portions 226 of various arc sizes may be provided, whereby the guide portions 226 are an interchangeable part that can be used according to each intervention and mast shapes. Alternatively, the guide portion may be V-shaped in form.

The articulated arm 200 is connected to the carriage 140 by hinge 210. The hinge 210 has an axis that is parallel to the longitudinal axis L of the elevator 120. The hinge 210 is positioned at the turbine mast side 190 of the carriage 140, proximate the position of the mast 32. That is, the articulated arm 200 extends from the corner of the carriage 140 proximate the mast 32. The hinge 210 allows the articulated arm to pivot about the Z-axis in the X-Y plane. Alternatively, the articulated arm 200 may be connected to the middle of the carriage 140, between the turbine mast side 190 and the support vessel side 192.

The hinge 210 also permits movement of the articulated arm 200 in a vertical plane. The hinge 210 is a dual axis hinge. In any embodiment, the hinge may have a compliant feature to permit movement of the articulated arm in the vertical plane. Movement of the articulated arm 200 in the vertical plane is controlled by at least one actuator 202.

The articulated arm 200 may be swung between a park position, in which the articulated arm 200 is adjacent to the carriage 140, to an active position, in which the articulated arm extends away from the carriage 140 and towards the mast 32 (best shown in FIG. 5B).

The articulated arm 200 supports a table 230. Specifically, the telescopic section 224 of the articulated arm 200 supports the table 230.

A first motion compensation device 240 is connected to the table 230 of the articulated arm 200. The first motion compensation device 240 comprises a hexapod. The hexapod comprises six pneumatic or hydraulic actuators connected to a platform, allowing six degree of freedom control (x, y, z, roll, pitch, yaw) of the component to be supported.

The first motion compensation device 240 supports an intervention element. The intervention element is a first prehension device 250. The first prehension device 250 comprises a single jaw hinged about an axis running in parallel to the y-axis. Alternatively, or additionally, the intervention element may be a support. Alternatively, or additionally, the intervention element may be a saddle. The turbine blade has a circular cross section adjacent the root, therefore a simple saddle is sufficient in supporting and restraining the turbine blade during intervention. Alternatively, or additionally, the intervention element may be a double saddle.

A further articulated arm may be provided. The articulated arm 200 and further articulated arm may be positioned on opposite sides of the carriage 140.

The carriage 140 has a further intervention element. The further intervention element is translatable along a plane perpendicular to the vertical axis of the elevator. The further intervention element is provided on the transfer table 150 connected to the carriage 140. The further intervention element is a second prehension device 170. The second prehension device 170 comprises a pair of jaws hinged about an axis running in parallel to the y-axis. Alternatively, or additionally, the further intervention element may be a support. Alternatively, or additionally, the further intervention element may be a saddle, or a double saddle.

A second motion compensation device 160 is connected to the transfer table 150 and supports the further intervention element. The second motion compensation device 160 comprises a hexapod. The hexapod comprises six pneumatic or hydraulic actuators connected to a platform, allowing six degree of freedom control (x, y, z, roll, pitch, yaw) of the further intervention element.

### Intervention

As described above, the wind turbines 20 are very large structures, with a nacelle 34 typically 130 m from a surface of the body of water 12. Due to wave (and a lesser extent wind) action on the floating offshore wind turbine platform 14, the absolute motion at the top of the wind turbine mast 32 at between 100 m to 150 m above the surface of the body of water 12 is up to +/-8 m in x, y directions and +/- 2.0 m in z direction for conditions in the body of water with a significant wave height Hs = 3.0 m and a wave period of 12 seconds.

When the offshore intervention platform 100 is docked to the wind turbine platform 14, due to the distortion effects cause by wind and wave action on the wind turbine mast 32 and the intervention platform elevator 120, the relative motion between the top of the wind turbine mast 32 and the top of the intervention platform elevator 120 at between 100 m to 150 m above the surface of the body of water 12 is up to +/-1.2 m in x, y directions and +/- 0.5 m in z direction for conditions in the body of water with a significant wave height Hs = 3.0 m and a wave period of 12 seconds. The term "significant wave height" denotes the characteristic height of the random waves in a sea state.

The intervention is for example an installation of a wind turbine equipment and/or a maintenance of the wind turbine equipment. In particular, the wind turbine equipment is a blade 40, and the intervention is the installation of a blade 40, a maintenance on a blade 40, or a replacement of a blade 40.

For context, the installation of a blade 40 onto the nacelle 34, requires mating the root of the blade 40 onto extension of bolts rods of the nacelle 34 with an accuracy of position within a +/-10 mm window, i.e a factor of up to 800 with regards to the absolute motion, and a factor of up to 120 with regards to the relative motions.

Other interventions concerning the nacelle 34 or the mast 32 are also within the scope of interventions which can be carried out using the intervention platform 100.

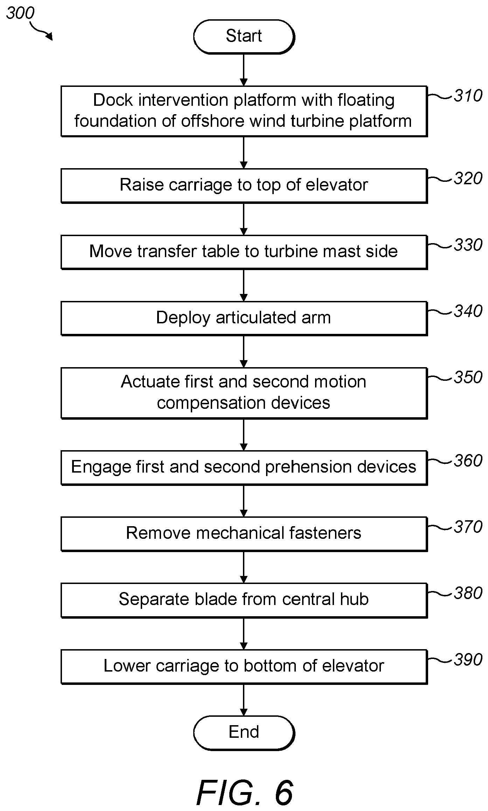

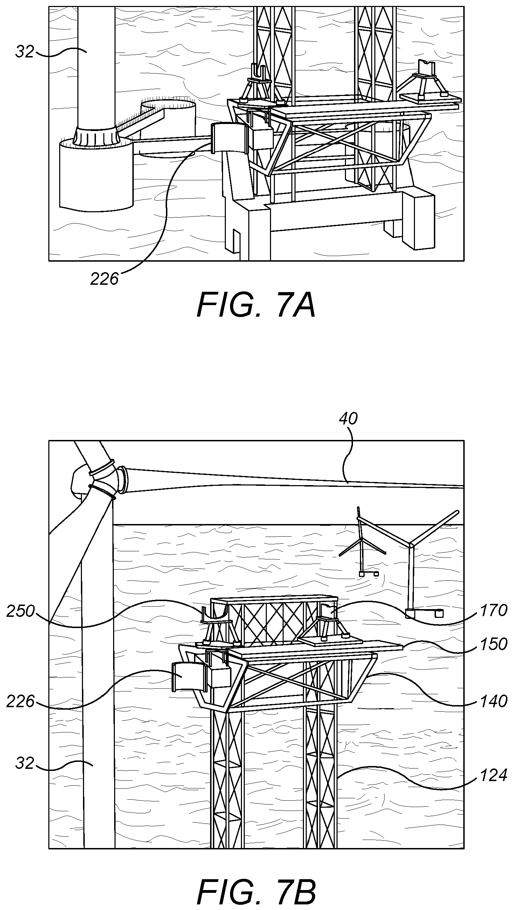

FIG. 6 is a flowchart of a method 300 for removing a turbine blade 40 from an offshore wind turbine platform 14 in accordance with an example implementation. Reference is also made to FIGS. 7A to 7D showing schematic perspective views of selected steps in the method of of FIG. 6.

At block 310, the intervention platform 100 is docked with the floating foundation 16 of the offshore wind turbine platform 14. In an example, the intervention platform 100 is brought into the vicinity of the offshore wind turbine platform 14 by one or more tug vessels, then undergoes a self-propelled final approach and dock sequence. In FIG. 7A the carriage 140 is shown lowered at the bottom position of the elevator 120, and the articulated arm 200 is shown in the park position, in which the articulated arm 200 is adjacent to the carriage 140 and extending away from the turbine mast 32. The concave surface of the guide portion 226 can be seen pointing away from the turbine mast 32 when the articulated arm 200 is in the park position.

At block 320, the carriage 140 is raised to the top of the elevator 120. The elevator 120 may have a telescopic section 124, and thus the telescopic section 124 of the elevator 120 may be extended to increase the amount to which the elevator 120 extends along the longitudinal axis L. The carriage 140 may be raised before, during and/or after extension of the telescopic section 124 of the elevator 120. In FIG. 7B, the carriage 140 is shown in the process of being raised to the top of the elevator 120. The transfer table 150 is positioned in the support vessel side zone 146 and the articulated arm 200 is withdrawn and on the same side of the carriage 140 as the transfer table.

At block 330, the transfer table 150 is moved to the turbine mast side. The transfer table may be slid from the support vessel side zone 146 to the turbine side support zone 144 along the X axis. Then transfer table may be moved along the Y-axis in addition, to position the transfer table more accurately in the region of the centre of gravity of the turbine blade 40.

At block 340, the articulated arm 200 is deployed to make a contact with the mast 32 of the wind turbine 20. In an example, the articulated arm 200 is swung from the park position, in which the articulated arm 200 is adjacent to the carriage 140, to an active position, in which the articulated arm extends away from the carriage 140 and towards the mast 32. In an example, the telescopic part is extended from the base section 222 via the telescopic joint 223. The guide portion 226 makes contact with the mast 32 and then follows the mast 32 to account for movement of the wind turbine mast relative to the intervention platform in the horizontal plane due to wind and wave effects. Very limited load is transferred through the articulated arm 200, instead the articulated arm 200 extends and retracts along the longitudinal axis of the articulated arm, as well as pivoting about the hinge axis running in parallel to the z-axis. Some pivoting around the horizontal axis is possible via the hinge and/or compliant feature and/or sliding joint.

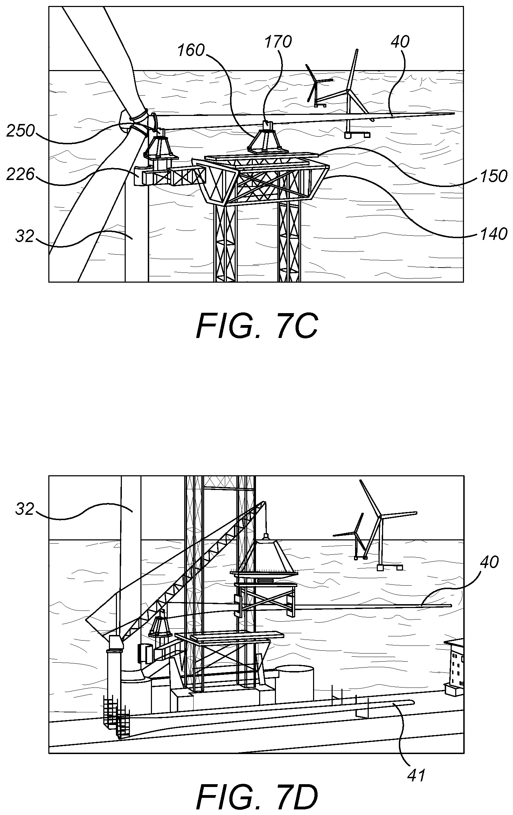

In FIG. 7C, the carriage 140 has been raised to the top of the elevator 120 and the transfer table 150 slid to the turbine side support zone 144. The movement of the transfer table 150 to the turbine side support zone has meant that the second motion compensation device 160 and respective hexapod is positioned just below the turbine blade 40 at position near the center of gravity of the turbine blade 40. Effectively, the second motion compensation device 160 is moved from a first side of the carriage 140 to a second side of the carriage 140 when the carriage 140 is at the vertical limit of the elevator 120.

The articulated arm 200 has been pivoted to the same side as the transfer table 150. The articulated arm 200 has also been extended so as to allow contact with the mast 32 of the wind turbine 20. The curved surface of the guide portion 226 contacts the curved surface of the mast 32. The movement of the articulated arm 200 has brought the intervention element, in this example, the first motion compensation device 240 and respective hexapod just below the turbine blade 40 at position near the flange.

At block 350, the first and second motion compensation devices 160, 240 are actuated to bring the first and second prehension devices 250, 170 into close contact with the turbine blade 40. At block 360, the first and second prehension devices 170, 250 are actuated to grip and support the turbine blade. This allows the first prehension device 250 to adaptively move with the blade root to account for movement, via the movement of the table.

At block 370, mechanical fasteners are removed to allow separation of the turbine blade 40 from the central hub 38.

At block 380, the turbine blade 40 is moved away from the central hub 38. This may be under the coordinated action of one or more the first and second motion compensation devices 240, 160 and the transfer table 150 moving along the Y or X axes. The proximity of the first prehension device 250 to the blade root allows positioning of the blade 40 with respect to the hub with great accuracy. Whilst the turbine blade 40 is moved away from the central hub 38, the articulated arm 200 remains in contact with the turbine mast 32 via the guide portion 226 to ensure controlled operation. Depending upon the size of turbine, the compensation devices 240, 160 alone may be provided with sufficient track to move the turbine blade 40 a sufficient distance away from the central hub 38 in order to provide safe clearance. Alternatively, or additionally, the first prehension device 250 may be provided with a transfer table comparable to the transfer table 150 of the carriage 140, in order to provide additional track to perform the movement of the turbine blade 40 away from the central hub 38.

The transfer table 150 is slid from the turbine side support zone 144 back to the the support vessel side zone 146. Effectively, the second motion compensation device 160 is moved from a second side of the carriage 140 to a first side of the carriage 140 when the carriage 140 is at the vertical limit of the elevator 120.

At block 390, the carriage 140 is lowered to the bottom of the elevator 120. From this position, the turbine blade 40 may be moved to another support vessel using a crane of the support vessel. Preferably, before the carriage 140 is lowered, the articulated arm 200 is withdrawn from the turbine mast 32, and placed in the park position. This increases the clearance between the intervention elements and the turbine mast 32.

FIG. 7D shows a crane of the support vessel removing the turbine blade 40 from the carriage 140. A replacement blade 41 is also shown in the support vessel, ready for replacement.

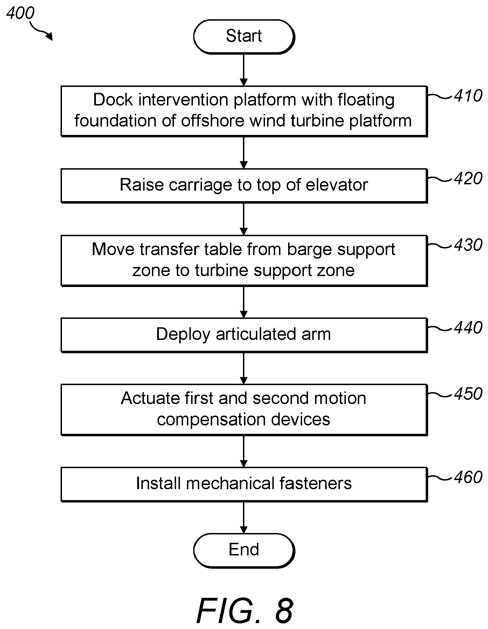

FIG. 8 is a flowchart of a method 400 for installing a turbine blade 40 on an offshore wind turbine platform 14 in accordance with an example implementation.

At block 410 the intervention platform 100 is docked with the floating foundation 16 of the offshore wind turbine platform 14. The turbine blade 40 is moved from a support vessel using a crane of this vessel to the first and second prehension devices 250, 170, supported by the respective first and second motion compensation devices 240, 160. Before the turbine blade 40 is captured by the first and second prehension devices 250, 170, the transfer table 150 may be more accurately positioned. The transfer table 150 may be moved along the Y-axis, to position the transfer table 150, and specifically the second prehension device 170 more accurately in the region of the centre of gravity of the turbine blade 40.

At block 420, the carriage 140 is raised to the top of the elevator 120. The elevator 120 may have a telescopic section 124, and thus the telescopic section 124 of the elevator 120 may be extended to increase the amount to which the elevator 120 extends along the longitudinal axis L. The carriage 140 may be raised before, during and/or after extension of the telescopic section 124 of the elevator 120.

At block 430, the transfer table 150 is moved to the mast side. The transfer table may be slid from the support vessel side zone 146 to the turbine side support zone 144 along the x axis.

At block 440, the articulated arm 200 is deployed to make a contact with the mast 32 of the wind turbine 20. In an example, the articulated arm 200 is swung from the park position, in which the articulated arm 200 is adjacent to the carriage 140, to an active position, in which the articulated arm extends away from the carriage 140 and towards the mast 32. In an example, the telescopic part is extended from the base section 222 via the telescopic joint 223. The guide portion 226 makes contact with the mast 32 and then follows the mast 32 to account for movement of the wind turbine mast relative to the intervention platform in the horizontal plane due to wind and wave effects. No significant load is transferred through the articulated arm 200, instead, the articulated arm 200 extends and retracts along the longitudinal axis of the articulated arm, as well as pivoting about the hinge axis running in parallel to the z-axis, and around a horizontal axis to follow the elevation angle necessary depending on height relative variations). Any movement of the articulated arm 200 is replicated to an extend by the second motion compensation device 160 supporting the turbine blade 40 via the second prehension device 170.

At block 450, the first and second motion compensation devices 240, 160 are actuated. In an example, the first and second motion compensation devices 240, 160 are actuated to deliver the turbine blade into alignment with the central hub 38 of the rotor 36.

Optionally, the first prehension device 250 may be provided with a transfer table comparable to the transfer table 150 of the carriage 140, in order to provide additional track to perform the movement of the turbine blade 40 toward from the central hub 38 in coordinated movement with the transfer table 150.

At block 460, mechanical fasteners are installed to connect the turbine blade 40 to the central hub 38. The first and second motion compensation devices 240, 160 remain active whilst the mechanical fasteners are connected.

In an alternate arrangement, the first motion compensation device 240 supports a crane or additional piece of handling equipment as the intervention element. This may be used to lift and deliver other turbine components to the top of the mast such as blade bearing or pinions replacement parts.

## Claims

1. An articulated arm comprising:
- a first arm part and a second arm part;
- a telescopic joint coupling the first arm part with the second arm part;
- a hinge for connection to a portion of an intervention platform, the hinge permitting movement of the articulated arm about a first plane,
- an intervention element connected to the second arm part to interact with a wind turbine component;
- wherein the second arm part has a guide portion to couple to a wind turbine mast.

2. The articulated arm of claim 1, wherein the hinge is a dual axis hinge, the dual axis hinge also permitting movement of the articulated arm about a second plane, optionally, wherein the hinge has a compliant feature, the compliant feature permitting movement of the articulated arm about a second plane.

3. The articulated arm of any preceding claim, wherein the guide portion is connected to the second arm part with a sliding joint, to permit relative movement of the guide portion and the second arm part, optionally, wherein the guide portion has a concave surface to couple to a wind turbine mast, optionally, wherein the guide portion is arcuate in form, with an arc that extends between 90 and 180 degrees around the vertical axis, optionally, wherein the guide portion is a V-shape.

4. The articulated arm of any preceding claim, further comprising a motion compensation device, wherein the intervention element is provided on the motion compensation device, optionally, wherein the intervention element comprises a support and/or a prehension device, and/or a crane.

5. An offshore intervention platform comprising:
- an elevator having a carriage, the carriage being translatable along a longitudinal axis of the elevator;
- an articulated arm having a first arm part and a second arm part; a telescopic joint coupling the first arm part with the second arm part; a hinge connected to a portion of the carriage, the hinge permitting movement of the articulated arm in a first plane,
- the articulated arm having an intervention element connected to the second arm part to interact with a wind turbine component, and wherein the second arm part has in a guide portion to couple to a wind turbine mast.

6. The offshore intervention platform of claim 5, wherein the carriage is provided with a further intervention element to interact with the wind turbine component, and wherein the further intervention element is translatable along a plane perpendicular to the longitudinal axis of the elevator, optionally wherein the intervention element supports a turbine blade in the region of a wind turbine blade flange and the further intervention element supports the turbine blade in the region of a wind turbine blade centre of gravity, wherein the further intervention element is optionally provided on a transfer table connected to the carriage, the transfer table being translatable along a plane perpendicular to the longitudinal axis of the elevator.

7. The offshore intervention platform of any of claims 5 or 6, wherein the hinge also permits movement of the articulated arm about a second plane.

8. The offshore intervention platform of any of claims 5 to 7, wherein the articulated arm has a first motion compensation device connected between the second arm part and the intervention element.

9. The offshore intervention platform of any of claims 5 to 8, wherein the carriage has a second motion compensation device connected between the carriage and the further intervention element.

10. The offshore intervention platform of any of claims 5 to 9, further comprising a further articulated arm, wherein the articulated arm and further articulated arm are positioned on opposite sides of the carriage.

11. The offshore intervention platform of any of claims 5 to 10, wherein the elevator is adjustable in height, optionally, wherein the elevator is telescopic.

12. An intervention method on an offshore wind turbine platform comprising the following steps:
- raising a carriage along a vertical axis of an elevator;
- deploying an articulated arm to couple to a mast of the offshore wind turbine platform via a guide portion, wherein the articulated arm has a first arm part and a second arm part, the second arm part having the guide portion; a telescopic joint to permit extension and retraction of the second arm part relative to the first arm part; a hinged joint connected to a portion of the carriage, the hinged joint permitting movement of the articulated arm in a horizontal plane; the articulated arm having an intervention element connected to the second arm part to interact with a wind turbine component;
- following movement of the wind turbine mast relative to the intervention platform in the horizontal plane by extension and retraction articulated arm and by pivoting of the articulated arm about the hinged joint; and
- performing an intervention on the offshore wind turbine platform using the intervention element.

13. The intervention method according to claim 12, wherein the carriage has a second motion compensation device and a further intervention element to interact with the wind turbine component and wherein the step of performing an intervention on the offshore wind turbine platform comprises using both the intervention element and further intervention element.

14. The intervention method according to claim 13, wherein performing the intervention comprises removing a wind turbine equipment and/or mounting a wind turbine equipment, in particular a blade of the wind turbine using the intervention element and further intervention element, wherein the intervention element comprises a first prehension device connected to a first motion compensation device and the further intervention element comprises a second prehension device connected to a second motion compensation device.

15. The intervention method according to claim 13 or 14, further comprising the step of moving the further intervention element from a first side of the carriage to a second side of the carriage when the carriage is at the vertical limit of the elevator.

## Amended claims

### Amended claims in accordance with Rule 137(2) EPC.

1. An articulated arm (200) comprising:
- a first arm part (222) and a second arm part (224);
- a telescopic joint (223) coupling the first arm part with the second arm part;
- a hinge (210) for connection to a portion of an intervention platform, the hinge permitting movement of the articulated arm about a first plane,
- an intervention element (250) connected to the second arm part to interact with a wind turbine component;
- **characterized in that** the second arm part has a guide portion (226) to couple to a wind turbine mast (32), and the hinge comprises a dual axis hinge, the dual axis hinge also permitting movement of the articulated arm about a second plane.

2. The articulated arm of claim 1, wherein the hinge has a compliant feature, the compliant feature permitting movement of the articulated arm about the second plane.

3. The articulated arm of any preceding claim, wherein the guide portion is connected to the second arm part with a sliding joint, to permit relative movement of the guide portion and the second arm part.

4. The articulated arm of any preceding claim, wherein the guide portion has a concave surface to couple to a wind turbine mast, optionally, wherein the guide portion is arcuate in form, with an arc that extends between 90 and 180 degrees around the vertical axis,

5. The articulated arm of any preceding claim, wherein the guide portion is a V-shape.

6. The articulated arm of any preceding claim, further comprising a motion compensation device (240), wherein the intervention element is provided on the motion compensation device, optionally, wherein the intervention element comprises a support and/or a prehension device, and/or a crane.

7. An offshore intervention platform (100) comprising:
- an elevator (120) having a carriage (140), the carriage being translatable along a longitudinal axis of the elevator;
- an articulated arm (200) according to any of claims 1 to 6 wherein the hinge is connected to a portion of the carriage.

8. The offshore intervention platform of claim 7, wherein the carriage is provided with a further intervention element (170) to interact with the wind turbine component, and wherein the further intervention element is translatable along a plane perpendicular to the longitudinal axis of the elevator, optionally wherein the intervention element supports a turbine blade in the region of a wind turbine blade flange and the further intervention element supports the turbine blade in the region of a wind turbine blade centre of gravity, wherein the further intervention element is optionally provided on a transfer table (150) connected to the carriage, the transfer table being translatable along a plane perpendicular to the longitudinal axis of the elevator.

9. The offshore intervention platform of any of claims 7 to 8, wherein the carriage has a second motion compensation device (160) connected between the carriage and the further intervention element.

10. The offshore intervention platform of any of claims 7 to 9, further comprising a further articulated arm, wherein the articulated arm and further articulated arm are positioned on opposite sides of the carriage.

11. The offshore intervention platform of any of claims 7 to 10, wherein the elevator is adjustable in height, optionally, wherein the elevator is telescopic.

12. An intervention method on an offshore wind turbine platform comprising the following steps:
- raising a carriage (140) along a vertical axis of an elevator (120);
- deploying an articulated arm (200) to couple to a mast (32) of the offshore wind turbine platform via a guide portion (226), wherein the articulated arm has a first arm part (222) and a second arm part (224), the second arm part having the guide portion; a telescopic joint (223) to permit extension and retraction of the second arm part relative to the first arm part; a hinged joint (210) connected to a portion of the carriage, the hinged joint permitting movement of the articulated arm in a horizontal plane; the articulated arm having an intervention element (250) connected to the second arm part to interact with a wind turbine component;
- following movement of the wind turbine mast relative to the intervention platform in the horizontal plane by extension and retraction articulated arm and by pivoting of the articulated arm about the hinged joint; and
- performing an intervention on the offshore wind turbine platform using the intervention element.

13. The intervention method according to claim 12, wherein the carriage has a second motion compensation device (160) and a further intervention element (170) to interact with the wind turbine component and wherein the step of performing an intervention on the offshore wind turbine platform comprises using both the intervention element and further intervention element.

14. The intervention method according to claim 13, wherein performing the intervention comprises removing a wind turbine equipment and/or mounting a wind turbine equipment, in particular a blade (40) of the wind turbine using the intervention element and further intervention element, wherein the intervention element comprises a first prehension device connected to a first motion compensation device and the further intervention element comprises a second prehension device connected to a second motion compensation device.

15. The intervention method according to claim 13 or 14, further comprising the step of moving the further intervention element from a first side of the carriage to a second side of the carriage when the carriage is at the vertical limit of the elevator.
